Europäisches Patentamt

European Patent Office

Office européen des brevets

(19)

(11) Publication number: **0 079 180**
**B1**

(12) # EUROPEAN PATENT SPECIFICATION

(45) Date of publication of patent specification: **14.01.87**

(51) Int. Cl.⁴: **B 65 G 19/22,** E 21 F 13/06

(21) Application number: **82305757.5**

(22) Date of filing: **29.10.82**

(54) Improvements in scraper chain conveyors.

(30) Priority: **02.11.81 GB 8132925**

(43) Date of publication of application:
**18.05.83 Bulletin 83/20**

(45) Publication of the grant of the patent:
**14.01.87 Bulletin 87/03**

(84) Designated Contracting States:
**AT DE FR GB**

(56) References cited:
**BE-A- 718 513**
**BE-A- 718 513**
**DE-B-1 177 102**
**DE-C- 808 036**
**DE-U-1 785 586**
**DE-U-1 785 586**
**GB-A-2 000 096**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DY10 1XQ (GB)**

(74) Representative: **Lewis, David Overington**
**c/o Babcock International plc Cleveland House**
**19 St. James's Square**
**London SW1Y 4LN (GB)**

EP 0 079 180 B1

Courier Press, Leamington Spa, England.

## Description

This invention relates to scraper chain conveyors and to flight bars therefor, and, more particularly, to scraper chain conveyors used to move particulate material, such as coal, along troughs or pans.

In the past, such flight bars have generally been formed with a cross-section approximating to a square or rectangle. Thus in BE—A—718513, there is disclosed a hollow flight bar formed by mating half bars, each half bar being of channel cross-section formed by a main web flanked by first and second edge flanges extending laterally from the main web. The half bars are of constant cross-section and are penetrated by bolt holes at end portions. The half bars are assembled together to form a hollow box-like section. Arms extending laterally from chain connectors project into the end portions and are also formed with bolt holes. Bolts passing through the bolt holes secure the two half bars to opposed faces of the arms on the chain connectors. Thus the chain connectors tend to urge the half bars apart. A similar arrangement is shown in DE—U—1785586. In DE—U—177102 the half bars are welded together but are formed with attachment locations only at one end of each half bar, thereby placing a tension loading on the weld in operation.

By the present invention there is provided a flight bar for a scraper chain conveyor formed by mating identical half bars each half bar being of channel cross-section formed by a main web flanked by first and second edge flanges extending laterally from the main web (BE—A—718513) characterised in that the main web includes a first upper region extending adjacent to the first edge flange subtending an internal angle of approximately 115° with the adjoining first edge flange and an internal angle of approximately 160° with a second base region extending adjacent the second edge flange, the second region of the main web subtending an internal angle of approximately 95° with the adjoining second edge flange, each half bar, seen in its horizontal cross section, comprising lateral portions extending laterally from a mid-plane portion to end portions arranged to provide attachment to the conveyor chains, the lateral portions of the main web subtending an internal angle slightly less than 180° with the mid-plane portion and the first and second edge flanges tapering from the mid-plane portion towards the end portions such that free edges of the first and second edge flanges and corresponding faces of the end portions lie on a common plane.

By tapering down the cross-section in both planes the amount of metal used is reduced toward a minimum and end attachment portions are formed which are embraceable by connector pieces for connecting the flight bar to conveyor chains, thereby holding the half bars in mating engagement.

The invention will now be described, by way of example, with reference to the accompanying, partly diagrammatic, drawings, in which:—

Figure 1 is an elevation, with a portion omitted, of a flight bar formed by mating half bars of identical form for a scraper chain conveyor;

Figure 2 is a plan view of one mating half bar of the flight bar;

Figure 3 is a cross-section taken on the line III—III of Figure 1;

Figure 4 is a cross-section taken on the line IV—IV of Figure 1 of one half bar; and

Figure 5 is a cross-section through an end portion of a flight bar indicating an alternative construction.

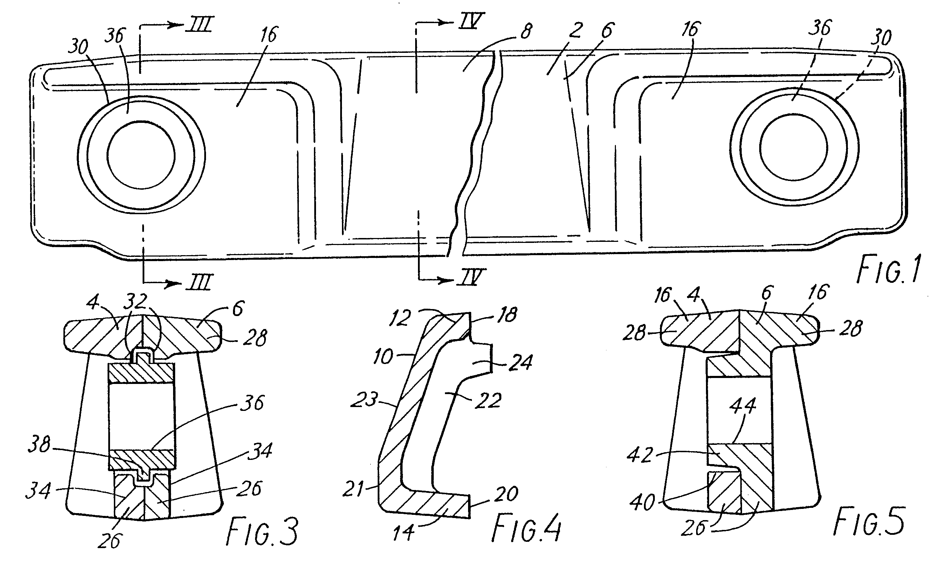

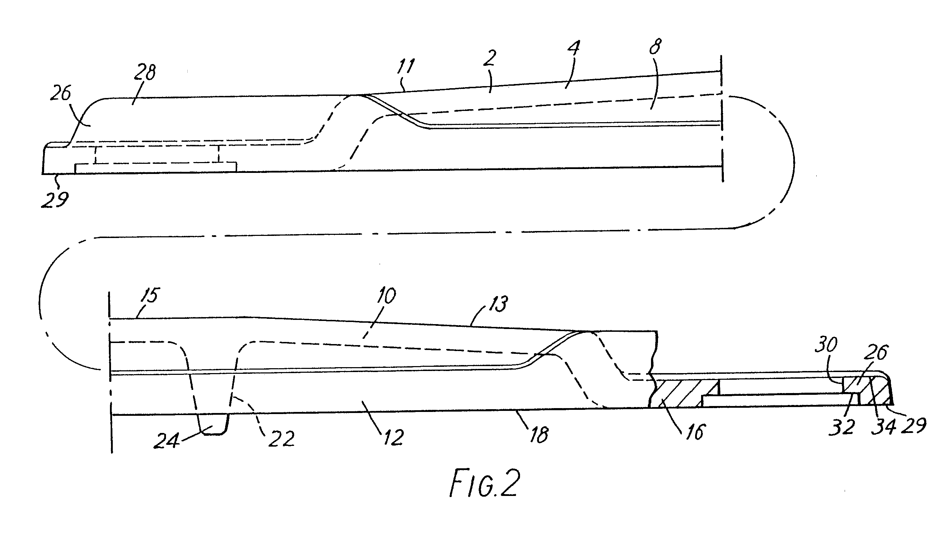

The flight bar 2 shown in Figures 1—4 is for a scraper chain conveyor (not shown) including a pair of endless chains passing over end sprocket wheels and running in upper and lower races formed by inwardly lipped flanges on pans extending the length of the conveyor. Connector pieces are positioned at spaced intervals along the chains in register to give spaced pairs of connector pieces. Bolted between each pair of connector pieces is the flight bar 2 formed by mating, identical, half bars 4, 6 each having a central portion 8 of channel section formed with an upright web 10 flanked by upper and lower horizontally extending flanges 12, 14. The upright web 10 is inclined both from the lower flange toward the upper flange and, as lateral portions 11, 13, from a mid-plane portion 15 toward end portions 16 which provide attachment to the connector pieces. The free edges 18, 20 of the upper and lower flanges are disposed in the same vertical cross-section, the lower flange 14 has a greater dimension in the direction of travel of the flight bar than that of the upper flange 12. In addition, both the upper and lower flanges taper outwardly from the mid-plane portion 15 to correspond to the lateral inclination of the upright web 10. A strengthening rib 22 is provided slightly offset from the mid-plane and has a portion 24 protruding beyond the vertical plane of the free edges 18, 20. The upper and lower flanges 12, 14 are inclined inwardly by approximately 5°, whilst the upright web 10 is formed with an upper region 23 inclined from a vertical base region 21 by approximately 20°.

The end portions 16 of each half bar 4, 6 are formed with a vertical web 26 and an outwardly directed flange 28, the channel section of the central portion 8 of the half bar merging smoothly with the end portions such that the mating faces 29 of the end portions are co-planar with the free edges 18, 20 of the upper and lower flanges 12, 14. Each end portion 16 is formed with an aperture 30 of oval form having stepped edge portions 32 such that the aperture to the face 34 adjacent the outwardly directed flange is of the lesser area.

Upon assembly, two half bars 4, 6 are placed together with the free edges 18, 20 of the upper and lower flanges 12, 14 abutting and the protruding portions 24 of the strengthening ribs 22 of the respective half bars extending into the channel portion of the other half bar. Plastic or steel cylindrical collars 38 are positioned in the apertures such that the collars 38 co-act with the stepped edge portions 32 slidably to retain the spacers within the apertures. The end portions 16 are then positioned between opposing jaws of connector pieces, a bolt passed through bores in the jaws and in the spacer and a nut tightened down on the bolt to form a connection providing limited movement between the connector piece and the flight bar and retaining the two half bars in mating engagement.

By forming the flight bar from two, mating, channel section, half bars each tapering from the mid-plane portion towards the end portions a bar of hollow section is produced having adequate strength and wear properties but requiring substantially less metal than a bar of solid section and less metal than a bar of constant cross-section channel form. The reduction in the amount of metal results in a reduction in weight and hence a possible reduction in the power requirements of the conveyor.

In an alternative embodiment of the invention, shown in Figure 5, the end portions 16 of the half bars 4, and 6 are arranged to mate together. Thus one end portion is formed with a boss 42 on the inner face of the vertical web 26 remote from the outwardly directed flange 28. A bore 44 penetrates the boss and the associated vertical web. Upon assembly, the bosses 42 in the respective end portions 16 of the half bars 4, 6 seat in the slightly oval apertures 40 in the adjacent end portions of the mating half bars and the bosses are positioned between the jaws of the connector pieces by means of bolts passing through bores in the jaws and the bores 44 in the bosses 42, a nut being tightened down on the bolt to secure the bolt.

### Claims

1. A flight bar (2) for a scraper chain conveyor formed by mating identical half bars (4, 6) each half bar being of channel cross-section formed by a main web (10) flanked by first and second edge flanges (12, 14) extending laterally from the main web, characterised in that the main web (10) includes a first upper region (23) extending adjacent to the first edge flange (12) subtending an internal angle of approximately 115° with the adjoining first edge flange (12) and an internal angle of approximately 160° with a second base region (21) extending adjacent the second edge flange (14), the second region (21) of the main web (10) subtending an internal angle of approxiamtely 95° with the adjoining second edge flange (14), each half bar (4, 6), seen in its horizontal cross-section, comprising lateral portions (11, 13) extending laterally from a mid-plane portion (15) to end portions (16) arranged to provide attachments to the conveyor chains, the lateral portions (11, 13) of the main web (10) subtending an internal angle slightly less than 180° with the mid-flange portion (15) and the first and second end flanges (12, 14) tapering from the mid-plane portion towards the end portions such that free edges (18, 20) of the first and second edge flanges and corresponding faces of the end portions lie on a common plane.

2. A flight bar as claimed in Claim 1, characterised in that a strengthening rib (22) provided on each half bar (4, 6) extending perpendicular to the main web (10) and the first and second edge flanges (12, 14) is positioned slightly offset from the mid-plane of the half bar and is formed with a portion (24) protruding beyond the free edges (18, 20) of the first and second flanges (12, 14).

3. A flight bar as claimed in Claim 1 or Claim 2, characterised in that end portions (16) of each half bar (4, 6) are formed with a web (26) provided with an aperture (30) of oval form having stepped edge portions (32) accommodating a circumferential collar (38) on a cylindrical spacer (36) arranged to be secured to a connecting piece by a through bolt.

4. A flight bar as claimed in Claim 1 or Claim 2, characterised in that the end portions (16) of each half bar (4, 6) are formed with a web (26) with one end portion being formed with a slightly oval aperture (40) in the web and the other end portion being formed with a boss (42) arranged to fit loosely in a corresponding aperture (40) in a mating half bar and to be secured to a connecting piece by a through bolt.

### Patentansprüche

1. Mitnehmerstab (2) für einen Kratzkettenförderer, der aus zusammenpassenden identischen Halbstäben (4, 6) gebildet ist, wobei jeder Halbstab einen kanalförmigen Querschnitt hat, der aus einem Hauptsteg (10), flankiert von einem ersten und einem zweiten Flansch (12, 14) gebildet ist, die sich seitlich vom Hauptsteg erstrecken, dadurch gekennzeichnet, daß der Hauptsteg (10) einen ersten oberen Bereich (23) besitzt, der sich benachbart zum ersten Randflansch (12) erstreckt und mit dem benachbarten ersten Randflansch (12) einen inneren Winkel von etwa 115° und mit einem zweiten Basisbereich (21), der sich benachbart zum zweiten Randflansch (14) erstreckt, einen inneren Winkel von etwa 160° einschließt, daß der zweite Bereich (21) des Hauptsteges (10) einen inneren Winkel von ungefähr 95° mit dem benachbarten zwischen Randflansch (14) einschließt, daß jeder Halbstab (4, 6), gesehen in seinem horizontalen Querschnitt, seitliche Abschnitte (11, 13) umfaßt, die sich seitlich von einem Mittelebenenabschnitt (15) zu Endabschnitten (16) erstrecken, die zur Bildung von Befestigungen mit den Förderketten vorgesehen sind, daß seitliche Abschnitte (11, 13) des Hauptsteges (10) einen inneren Winkel von etwa etwas weniger als 180° mit dem Mittelebenenabschnitt (15) einschließen und daß der erste und der zweite Randflansch (12, 14) vom Mittelebenenabschnitt gegen die Endabschnitte abgeschrägt sind, sodaß die freien Ränder (18, 20) des ersten und zweiten Randflansches und entsprechende Flächen der Endabschnitte in einer gemeinsamen Ebene liegen.

2. Mitnehmerstab nach Anspruch 1, dadurch gekennzeichnet, daß eine Verstärkungsrippe (22) an jedem Halbstab (4, 6) vorgesehen ist, die sich senkrecht zum Hauptsteg (10) erstreckt, und daß der erste und der zweite Randflansch (12, 14) von der Mittelebene des Halbstabes etwas versetzt ist und mit einem Abschnitt (24) versehen ist, der über die freien Ränder (18, 20) des ersten und des zweiten Flansches (12, 14) hinausragt.

3. Mitnehmerstab nach Anspruch 1 oder 2, dadurch gekennzeichnet, daß die Endabschnitte (16) jedes Halbstabes (4, 6) mit einem Steg (26) ausgebildet sind, der mit Öffnung (30) ovaler Form versehen ist, die gestufte Randabschnitte (32) zur Aufnahme eines Umfangskragens (38) an einem zylindrischen Abstandshalter (36) hat, der durch einen durchgehenden Bolzen an einem Verbindungsstück befestigt werden soll.

4. Mitnehmerstab nach Anspruch 1 oder 2, dadurch gekennzeichnet, daß die Endabschnitte (16) jedes Halbstabes (4, 6) mit einem Steg (26) ausgebildet sind, wobei ein Endabschnitte mit einer geringfügig ovalen Öffnung (40) im Steg versehen ist und der andere Endabschnitt mit einem Anguß (42) ausgebildet ist, der lose in eine entsprechende Öffnung (40) in einen dazupassenden Halbstab paßt nd mit einem Verbindungsstück einen durchgehenden Bolzen gesichert ist.

**Revendications**

1. Barre de palette (2) pour transporteur à chaînes à raclettes, formée en accouplant des demi-barres indentiques (4, 6), chaque demi-barre ayant une section en U formée par une âme principale (10) flanquée d'une première et d'une deuxième ailes latérales (12, 14) partant latéralement de l'âme principale, caractérisé par le fait que l'âme principale (10) comprend une première région supérieure (23) s'étendant auprès de la première aile latérale (12), sous-tendant un angle intérieur d'environ 115° avec la première aile latérale adjacente (12) et un angle intérieur d'environ 160° avec une deuxième région de base (21) s'étendant auprès de la deuxième aile latérale (14), la deuxième région (21) de l'âme principale (10) sous-tendant un angle intérieur d'environ 95° avec la deuxième aile latérale adjacente (14), chaque demi-barre (4, 6), vue dans sa section horizontale, comprenant des parties latérales (11, 13) s'étendant latéralement, d'une partie de plan moyen (15) à des parties terminales (16) conçues pour assurer la fixation aux chaînes du transporteur, les parties latérales (11, 13) de l'âme principale (10) sous-tendant un angle légèrement inférieur à 180° avec la partie de plan moyen (15) et les première et deuxième ailes latérales (12, 14) partant obliquement de la partie de plan moyen vers les parties terminales, de sorte que des bords libres (18, 20) des premières et deuxième ailes latérales et des faces correspondantes des parties terminales sont situés dans un plan commun.

2. Barre de palette selon la revendication 1, caractérisée par le fait qu'une nervure de renforcement (22) prévue sur chaque demi-barre (4, 6), s'étendant perpendiculairement à l'âme principale (10) et aux première et deuxième ailes latérales (12, 14), est en position légèrement décalée par rapport au plan moyen de la demi-barre et est munie d'une partie (24) faisant saillie au delà des bords libres (18, 20) des première et deuxième ailes (12, 14).

3. Barre de palette selon la revendication 1 ou la revendication 2, caractérisée par le fait que des parties terminales (16) de chaque demi-barre (4, 6) sont munies d'une âme (26) munie d'une ouverture (30) de forme ovale ayant des parties marginales en gradin (32) logeant un collier circonférentiel (38) sur un élément d'espacement cylindrique (36) conçu pour être fixé à une pièce de liaison par un boulon passant.

4. Barre de palette selon la revendication 1 ou la revendication 2, caractérisée par le fait que les parties terminales (16) de chaque demi-barre (4, 6) sont munies d'une âme (26), l'une des parties terminales étant munie d'une ouverture légèrement ovale (40) dans l'âme et l'autre partie terminale étant munie d'un renflement (42) conçu pour s'adapter de façon lâche à une ouverture correspondante (40) d'une demi-barre complémentaire et pour être fixé à une pièce de liaison par un boulon passant.

FIG.1

FIG.3

FIG.4

FIG.5

0 079 180

FIG.2